(19)

Europäisches
Patentamt
European
Patent Office
Office européen
des brevets

(11)  **EP 3 859 820 A1**

(12)  **EUROPEAN PATENT APPLICATION**
published in accordance with Art. 153(4) EPC

(43) Date of publication:
04.08.2021  Bulletin 2021/31

(21) Application number: 19865358.6

(22) Date of filing: 19.09.2019

(51) Int Cl.:
*H01M 2/16* (2006.01)          *H01M 4/13* (2010.01)
*H01M 4/139* (2010.01)        *H01M 10/058* (2010.01)

(86) International application number:
**PCT/JP2019/036852**

(87) International publication number:
**WO 2020/066857 (02.04.2020 Gazette 2020/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  27.09.2018  JP 2018182889

(71) Applicant: **Zeon Corporation**
**Tokyo 100-8246 (JP)**

(72) Inventors:
• **TANAKA, Keiichiro**
  **Tokyo 100-8246 (JP)**
• **OKADA, Seiji**
  **Tokyo 100-8246 (JP)**

(74) Representative: **Parchmann, Stefanie**
**Maiwald Patentanwalts- und
Rechtsanwaltsgesellschaft mbH
Elisenhof
Elisenstraße 3
80335 München (DE)**

(54)  **SLURRY FOR NONAQUEOUS SECONDARY BATTERY ADHESIVE LAYER, BATTERY
MEMBER FOR NONAQUEOUS SECONDARY BATTERY WITH ADHESIVE LAYER, METHOD
OF MANUFACTURING LAMINATE FOR NONAQUEOUS SECONDARY BATTERY, AND
METHOD OF MANUFACTURING NONAQUEOUS SECONDARY BATTERY**

(57)    Provided is a technique relating to a slurry for a non-aqueous secondary battery adhesive layer that enables simple detection of an adhesive layer formed on a battery member while also causing a secondary battery to display good battery characteristics. The adhesive layer is formed using a slurry for a non-aqueous secondary battery adhesive layer that contains a polymer (A), an organic coloring material, and water, and in which the organic coloring material has a proportional content of not less than 0.1 parts by mass and not more than 50 parts by mass per 100 parts by mass of the polymer (A).

EP 3 859 820 A1

**Description**

TECHNICAL FIELD

The present disclosure relates to a slurry for a non-aqueous secondary battery adhesive layer, an adhesive layer-equipped battery member for a non-aqueous secondary battery, a method of producing a laminate for a non-aqueous secondary battery, and a method of producing a non-aqueous secondary battery.

BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. A secondary battery generally includes battery members such as a positive electrode, a negative electrode, and a separator that isolates the positive electrode and the negative electrode from each other and prevents short circuiting between the positive and negative electrodes.

A technique of adhering battery members of a secondary battery to each other, such as an electrode and a separator, to obtain a laminate for a secondary battery is conventionally used in production of secondary batteries such as described above. Battery members are adhered by, for example, producing a battery member that includes an adhesive layer at a surface thereof and then adhering this battery member to another battery member. Moreover, a battery member that includes an adhesive layer at a surface thereof can be formed by applying, onto the battery member surface, a slurry for a secondary battery adhesive layer that contains a polymer (binder) displaying adhesiveness and so forth dispersed and/or dissolved in a solvent, and subsequently drying the slurry for a secondary battery adhesive layer.

For example, in Patent Literature (PTL) 1, organic particles that have a core-shell structure including a core portion and a shell portion and in which the core portion and the shell portion are formed of polymers each having a specific degree of swelling in electrolyte solution are used as a binder. Moreover, in PTL 1, a battery member including an adhesive layer is produced through application and drying of a slurry that contains these organic particles and a laminate for a secondary battery is produced by adhering the battery member including the adhesive layer to another battery member. Furthermore, a secondary battery is produced by sealing the obtained laminate for a secondary battery in a battery container together with an electrolyte solution.

CITATION LIST

Patent Literature

PTL 1: WO2015/198530A1

SUMMARY

(Technical Problem)

In a situation in which battery members are to be adhered to each other via an adhesive layer, it is important that the adhesive layer is formed at a desired position. Therefore, there is demand for a technique that, in production of a laminate for a secondary battery using an adhesive layer, makes it possible to determine the position of an adhesive layer that has been formed on a battery member. Note that there is particularly demand for such a technique in a situation in which a laminate for a secondary battery is to be produced by applying a slurry for a secondary battery adhesive layer using an inkjet method or the like so as to form an adhesive layer having a desired pattern (i.e., in a case in which a slurry for a secondary battery adhesive layer is only to be applied onto part of a surface (application surface) of a battery member).

However, there has been a problem that detection of the position of an adhesive layer formed using the conventional slurry for a secondary battery adhesive layer described above is difficult.

Accordingly, one object of the present disclosure is to provide a slurry for a non-aqueous secondary battery adhesive layer that enables simple detection of the position of an adhesive layer while also causing a secondary battery to display good battery characteristics.

Another object of the present disclosure is to provide an adhesive layer-equipped battery member for a non-aqueous secondary battery for which simple detection of the position of the adhesive layer is possible and that can cause a secondary battery to display good battery characteristics.

Yet another object of the present disclosure is to provide a method of producing a laminate for a non-aqueous secondary battery and a method of producing a non-aqueous secondary battery that make it possible to inhibit the formation of defective products while also causing a secondary battery to display good battery characteristics.

(Solution to Problem)

The inventors carried out diligent studies to solve the problem set forth above. The inventors discovered that by using a slurry for a non-aqueous secondary battery adhesive layer that contains a polymer (A), an organic coloring material, and water, and in which the proportional content of the organic coloring material is within a specific range, it is possible to form an adhesive layer of which the position can be simply detected while also causing a secondary battery to display good battery characteristics. The inventors completed the present disclosure based on this finding.

Specifically, the present disclosure aims to advantageously solve the problem set forth above, and a presently disclosed slurry for a non-aqueous secondary battery adhesive layer (hereinafter, also referred to simply as a "slurry for an adhesive layer") comprises a polymer (A), an organic coloring material, and water, wherein the organic coloring material has a proportional content of not less than 0.1 parts by mass and not more than 50 parts by mass per 100 parts by mass of the polymer (A). By using a slurry for an adhesive layer that contains a polymer (A), an organic coloring material, and water, and in which the proportional content of the organic coloring material is not less than 0.1 parts by mass and not more than 50 parts by mass per 100 parts by mass of the polymer (A) in this manner, it is possible to form an adhesive layer of which the position can be simply detected while also causing a secondary battery to display good battery characteristics.

In the presently disclosed slurry for a non-aqueous secondary battery adhesive layer, the organic coloring material preferably has a solubility of 5 mass% or less in electrolyte solution at 25°C. Through the solubility of the organic coloring material in electrolyte solution at 25°C being 5 mass% or less, cycle characteristics of a secondary battery produced using the presently disclosed slurry for an adhesive layer can be improved.

Note that the "solubility" referred to in the present disclosure can be measured by a method described in the EXAMPLES section of the present specification.

In the presently disclosed slurry for a non-aqueous secondary battery adhesive layer, the organic coloring material preferably includes an organic coloring material that can form a metal complex with a metal ion. When the organic coloring material includes an organic coloring material that can form a metal complex with a metal ion, metal ions that have eluted into electrolyte solution from a positive electrode active material or the like can be trapped through formation of a metal complex with the organic coloring material during production of a secondary battery using the presently disclosed slurry for an adhesive layer. This can improve cycle characteristics of a secondary battery by reducing the amount of metal ions that have eluted into electrolyte solution.

Moreover, the present disclosure aims to advantageously solve the problem set forth above, and a presently disclosed adhesive layer-equipped battery member for a non-aqueous secondary battery (hereinafter, also referred to simply as an "adhesive layer-equipped battery member") comprises: a substrate; and an adhesive layer formed at at least one surface of the substrate, wherein the substrate is a separator substrate or an electrode substrate, and the adhesive layer is a dried product of any one of the slurries for a non-aqueous secondary battery adhesive layer set forth above. The adhesive layer included in the presently disclosed adhesive layer-equipped battery member can be simply detected because the adhesive layer is a dried product of the presently disclosed slurry for an adhesive layer, and thus is colored as a result of containing an organic coloring material. Therefore, according to the present disclosure, it is possible to provide an adhesive layer-equipped battery member for which the position of the adhesive layer can be simply detected and that can cause a secondary battery to display good battery characteristics.

Furthermore, the present disclosure aims to advantageously solve the problem set forth above, and a presently disclosed method of producing a laminate for a non-aqueous secondary battery (hereinafter, also referred to simply as a "laminate for a secondary battery") comprises: an application step of applying any one of the slurries for a non-aqueous secondary battery adhesive layer set forth above onto a substrate; a drying step of drying the slurry for a non-aqueous secondary battery adhesive layer that has been applied onto the substrate to form an adhesive layer; a detection step of detecting a position of the adhesive layer that has been formed on the substrate and performing a suitability judgment for a state of the adhesive layer; and an adhering step of adhering the substrate on which the adhesive layer has been formed and an adhesion target member via the adhesive layer in a case in which the state of the adhesive layer is judged to be suitable, wherein the substrate is either or both of a separator substrate and an electrode substrate. By using the presently disclosed slurry for a secondary battery adhesive layer in this manner, the position of an adhesive layer can be simply detected, and a substrate having a suitable adhesive layer state can be adhered to an adhesion target member while also causing a secondary battery to display good battery characteristics. Therefore, it is possible to inhibit the formation of defective products in production of a laminate for a secondary battery while also causing the secondary battery to display good battery characteristics.

Also, the present disclosure aims to advantageously solve the problem set forth above, and a presently disclosed method of producing a non-aqueous secondary battery uses a laminate for a non-aqueous secondary battery obtained by the method of producing a laminate for a non-aqueous secondary battery set forth above. By using a laminate for a non-aqueous secondary battery obtained by the presently disclosed method of producing a laminate for a non-aqueous secondary battery in this manner, it is possible to inhibit the formation of defective products in production of a secondary battery while also causing the secondary battery to display good battery characteristics.

(Advantageous Effect)

According to the present disclosure, it is possible to provide a slurry for a non-aqueous secondary battery adhesive layer that enables simple detection of the position of an adhesive layer while also causing a secondary battery to display good battery characteristics.

Moreover, according to the present disclosure, it is possible to provide an adhesive layer-equipped battery member for a non-aqueous secondary battery for which simple detection of the position of the adhesive layer is possible and that can cause a secondary battery to display good battery characteristics.

Furthermore, according to the present disclosure, it is possible to provide a method of producing a laminate for a non-aqueous secondary battery and a method of producing a non-aqueous secondary battery in which the formation of defective products is inhibited while also causing a secondary battery to display good battery characteristics.

DETAILED DESCRIPTION

The following provides a detailed description of embodiments of the present disclosure.

The presently disclosed slurry for a non-aqueous secondary battery adhesive layer can be used in production of the presently disclosed adhesive layer-equipped battery member for a non-aqueous secondary battery, laminate for a non-aqueous secondary battery, and non-aqueous secondary battery.

(Slurry for non-aqueous secondary battery adhesive layer)

The presently disclosed slurry for a secondary battery adhesive layer contains a polymer (A), an organic coloring material, and water, and can optionally further contain a polymer (B) and other components. Note that one type of polymer (A) may be contained as the polymer (A), or two or more types of polymers (A) may be contained in a freely selected ratio as the polymer (A).

<Polymer (A)>

The polymer (A) is a component that functions as a binder for adhering battery members, such as a separator substrate and an electrode substrate, to each other. An adhesive layer formed using the presently disclosed slurry for an adhesive layer enables good adhesion of battery members to each other as a result of the presently disclosed slurry for an adhesive layer containing the polymer (A).

[Chemical composition]

Examples of monomers that can be used to produce the polymer (A) include vinyl chloride monomers such as vinyl chloride and vinylidene chloride; vinyl acetate monomers such as vinyl acetate; aromatic vinyl monomers such as styrene, $\alpha$-methylstyrene, butoxystyrene, and vinylnaphthalene; vinylamine monomers such as vinylamine; vinylamide monomers such as N-vinylformamide and N-vinylacetamide; (meth)acrylic acid ester monomers such as methyl acrylate, ethyl acrylate, butyl acrylate, 2-ethylhexyl acrylate, methyl methacrylate, ethyl methacrylate, butyl methacrylate, and cyclohexyl methacrylate; (meth)acrylamide monomers such as acrylamide and methacrylamide; (meth)acrylonitrile monomers such as acrylonitrile and methacrylonitrile; fluorine-containing (meth)acrylic acid ester monomers such as 2-(perfluorohexyl)ethyl methacrylate and 2-(perfluorobutyl)ethyl acrylate; maleimide; and maleimide derivatives such as phenylmaleimide. One of these monomers may be used individually, or two or more of these monomers may be used in combination in a freely selected ratio.

Note that in the present disclosure, "(meth)acryl" is used to indicate "acryl" and/or "methacryl", whereas "(meth)acrylonitrile" is used to indicate "acrylonitrile" and/or "methacrylonitrile".

Although no specific limitations are placed on the structural form of the polymer (A), the polymer (A) preferably has a particulate form, and more preferably has a core-shell structure in which a core portion is covered by a shell portion. Through the polymer (A) being a particulate polymer having a core-shell structure, it is possible to improve adhesiveness in an adhesive layer formed using the presently disclosed slurry for an adhesive layer. Note that the shell portion may completely cover the outer surface of the core portion or may partially cover the outer surface of the core portion. In terms of external appearance, even in a situation in which the outer surface of the core portion appears to be completely covered by the shell portion, the shell portion is still considered to be a shell portion that partially covers the outer surface of the core portion so long as pores are formed that pass between inside and outside of the shell portion. Accordingly, a polymer (A) including a shell portion having pores that are continuous between an outer surface of the shell portion (i.e., a circumferential surface of the polymer (A)) and an outer surface of a core portion is considered to be a polymer in which a shell portion partially covers an outer surface of a core portion.

«Core portion»

-Chemical composition of core portion-

Examples of monomers that can be used to produce the core portion of the polymer (A) include the same monomers as described above. Of these monomers, the use of either or both of an aromatic vinyl monomer and a (meth)acrylic acid ester monomer is preferable from a viewpoint of strongly adhering battery members via an adhesive layer, with the use of both an aromatic vinyl monomer and a (meth)acrylic acid ester monomer being more preferable. In other words, the core portion of the polymer (A) preferably includes either or both of an aromatic vinyl monomer unit and a (meth)acrylic acid ester monomer unit, and more preferably includes both an aromatic vinyl monomer unit and a (meth)acrylic acid ester monomer unit.

The phrase "includes a monomer unit" as used in the present disclosure means that "a polymer obtained with the monomer includes a repeating unit derived from the monomer".

The proportion constituted by an aromatic vinyl monomer unit in the core portion of the polymer (A) when all repeating units (all monomer units) included in the core portion of the polymer (A) are taken to be 100 mass% is, from a viewpoint of more strongly adhering battery members via an adhesive layer, preferably 50 mass% or more, more preferably 60 mass% or more, and even more preferably 75 mass% or more, and is preferably 95 mass% or less, and more preferably 90 mass% or less.

Moreover, the proportion constituted by a (meth)acrylic acid ester monomer unit in the core portion of the polymer (A) when all repeating units (all monomer units) included in the core portion of the polymer are taken to be 100 mass% is, from a viewpoint of even more strongly adhering battery members via an adhesive layer, preferably 2 mass% or more, more preferably 3 mass% or more, and even more preferably 4 mass% or more, and is preferably 20 mass% or less, more preferably 15 mass% or less, and even more preferably 10 mass% or less.

Note that the proportion constituted by each monomer unit can be measured by a nuclear magnetic resonance (NMR) method such as $^1$H-NMR.

The core portion of the polymer (A) can also include an acid group-containing monomer unit. Examples of acid group-containing monomers that can form an acid group-containing monomer unit include monomers that include an acid group such as carboxy group-containing monomers, sulfo group-containing monomers, and phosphate group-containing monomers.

Moreover, examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

Examples of phosphate group-containing monomers include 2-(meth)acryloyloxyethyl phosphate, methyl-2-(meth)acryloyloxy ethyl phosphate, and ethyl-(meth)acryloyloxyethyl phosphate.

Note that in the present disclosure, "(meth)allyl" is used to indicate "allyl" and/or "methallyl", whereas "(meth)acryloyl" is used to indicate "acryloyl" and/or "methacryloyl".

Of these acid group-containing monomers, carboxy group-containing monomers are preferable, of which, monocarboxylic acids are preferable, and (meth)acrylic acid is more preferable.

One acid group-containing monomer may be used individually, or two or more acid group-containing monomers may be used in combination in a freely selected ratio.

The proportion constituted by an acid group-containing monomer unit in the core portion of the polymer (A) when all repeating units (all monomer units) included in the core portion of the polymer (A) are taken to be 100 mass% is preferably 0.1 mass% or more, and more preferably 1 mass% or more, and is preferably 15 mass% or less, and more preferably 10 mass% or less. By setting the proportion constituted by an acid group-containing monomer unit within any of the ranges set forth above, dispersibility of the core portion of the polymer (A) can be increased in production of the polymer (A), which facilitates formation of a shell portion partially covering the outer surface of the core portion with respect to the outer surface of the core portion of the polymer (A).

The core portion of the polymer (A) may also include a hydroxy group-containing monomer unit. Examples of hydroxy group-containing monomers that can form a hydroxy group-containing monomer unit include 2-hydroxyethyl acrylate, 2-hydroxypropyl acrylate, 2-hydroxyethyl methacrylate, and 2-hydroxypropyl methacrylate. One of these hydroxy group-containing monomers may be used individually, or two or more of these hydroxy group-containing monomers may be used in combination in a freely selected ratio.

In a case in which the core portion of the polymer (A) includes a hydroxy group-containing monomer unit, the proportion constituted by the hydroxy group-containing monomer unit in the core portion of the polymer (A) when all repeating units (all monomer units) included in the core portion of the polymer (A) are taken to be 100 mass% is preferably 0.1 mass% or more, and more preferably 1 mass% or more, and is preferably 15 mass% or less, and more preferably 10 mass% or less. By setting the proportion constituted by a hydroxy group-containing monomer unit within any of the ranges set forth above, dispersibility of the core portion of the polymer (A) can be increased in production of the polymer (A), which facilitates formation of a shell portion partially covering the outer surface of the core portion with respect to the outer surface of the core portion of the polymer (A).

The core portion of the polymer (A) preferably includes a cross-linkable monomer unit in addition to the monomer units described above. A cross-linkable monomer that can form a cross-linkable monomer unit is a monomer that can form a cross-linked structure during or after polymerization through heating or irradiation with energy rays. The inclusion of a cross-linkable monomer unit in the core portion of the polymer (A) makes it easier to set the subsequently described proportion of THF-insoluble content and degree of swelling in electrolyte solution of the polymer (A) within preferred ranges.

Examples of cross-linkable monomers that can be used include polyfunctional monomers having at least two groups that display polymerization reactivity in the monomer. Examples of such polyfunctional monomers include divinyl monomers such as divinylbenzene, 1,3-butadiene, isoprene, and allyl methacrylate; di(meth)acrylic acid ester monomers such as ethylene dimethacrylate, diethylene glycol dimethacrylate, ethylene glycol dimethacrylate, diethylene glycol diacrylate, and 1,3-butylene glycol diacrylate; tri(meth)acrylic acid ester monomers such as trimethylolpropane trimethacrylate and trimethylolpropane triacrylate; ethylenically unsaturated monomers that include an epoxy group such as allyl glycidyl ether and glycidyl methacrylate; and $\gamma$-methacryloxypropyltrimethoxysilane. Of these cross-linkable monomers, di(meth)acrylic acid ester monomers are more preferable from a viewpoint that the proportion of THF-insoluble content and degree of swelling in electrolyte solution of the polymer (A) can easily be controlled.

One of these cross-linkable monomers may be used individually, or two or more of these cross-linkable monomers may be used in combination in a freely selected ratio.

The proportion constituted by a cross-linkable monomer unit in the core portion of the polymer (A) when all repeating units (all monomer units) included in the core portion of the polymer (A) are taken to be 100 mass% is preferably 0.1 mass% or more, more preferably 0.2 mass% or more, and even more preferably 0.5 mass% or more, and is preferably 10 mass% or less, more preferably 5 mass% or less, and even more preferably 3 mass% or less. By setting the proportion constituted by a cross-linkable monomer unit within any of the ranges set forth above, battery members can be even more strongly adhered via an adhesive layer while also controlling the proportion of THF-insoluble content and degree of swelling in electrolyte solution of the polymer (A) and further improving rate characteristics of a secondary battery.

-Glass-transition temperature (Tg) of core portion-

The glass-transition temperature (Tg) of the core portion of the polymer (A) is preferably 40°C or higher, more preferably 50°C or higher, and even more preferably 60°C or higher, and is preferably 200°C or lower, more preferably 150°C or lower, and even more preferably 110°C or lower. When the glass-transition temperature of the core portion of the polymer (A) is not lower than any of the lower limits set forth above, it is possible to inhibit reduction of adhesiveness of battery members in a production process (hereinafter, referred to as "process adhesiveness") during production of a secondary battery using the presently disclosed slurry for an adhesive layer. Moreover, when the glass-transition temperature of the core portion of the polymer (A) is not higher than any of the upper limits set forth above, reduction of polymerization stability of the polymer (A) can be inhibited.

«Shell portion»

-Chemical composition of shell portion-

Examples of monomers that can be used to produce the shell portion of the polymer (A) include the same monomers as listed as examples of monomers that can be used to produce the core portion of the polymer (A). One of such monomers may be used individually, or two or more of such monomers may be used in combination in a freely selected ratio.

Of these monomers, the use of either or both of a (meth)acrylic acid ester monomer and an aromatic vinyl monomer as monomers for producing the shell portion of the polymer (A) is preferable from a viewpoint of even more strongly adhering battery members via an adhesive layer, with the use of both a (meth)acrylic acid ester monomer and an aromatic vinyl monomer being more preferable. In other words, the shell portion of the polymer (A) preferably includes either or both of a (meth)acrylic acid ester monomer unit and an aromatic vinyl monomer unit, and more preferably includes both a (meth)acrylic acid ester monomer unit and an aromatic vinyl monomer unit.

The proportion constituted by a (meth)acrylic acid ester monomer unit in the shell portion of the polymer (A) when all repeating units (all monomer units) included in the shell portion of the polymer (A) are taken to be 100 mass% is, from a viewpoint of even more strongly adhering battery members via an adhesive layer, preferably 10 mass% or more, more preferably 30 mass% or more, and even more preferably 50 mass% or more, and is preferably 95 mass% or less, more preferably 90 mass% or less, and even more preferably 85 mass% or less.

Moreover, the proportion constituted by an aromatic vinyl monomer unit in the shell portion of the polymer (A) when all repeating units (all monomer units) included in the shell portion of the polymer (A) are taken to be 100 mass% is, from a viewpoint of even more strongly adhering battery members via an adhesive layer, preferably 5 mass% or more, more preferably 10 mass% or more, and even more preferably 15 mass% or more, and is preferably 40 mass% or less, more preferably 30 mass% or less, and even more preferably 25 mass% or less.

Besides a (meth)acrylic acid ester monomer unit and an aromatic vinyl monomer unit, the shell portion of the polymer (A) can also include an acid group-containing monomer unit. Examples of acid group-containing monomers that can form an acid group-containing monomer unit include monomers that include an acid group such as carboxy group-containing monomers, sulfo group-containing monomers, and phosphate group-containing monomers. Specifically, examples of acid group-containing monomers that can be used include the same monomers as the acid group-containing monomers that can be used to form the core portion.

Of these acid group-containing monomers, carboxy group-containing monomers are preferable, of which, monocarboxylic acids are more preferable, and (meth)acrylic acid is even more preferable.

One acid group-containing monomer may be used individually, or two or more acid group-containing monomers may be used in combination in a freely selected ratio.

The proportion constituted by an acid group-containing monomer unit in the shell portion of the polymer (A) when all repeating units (all monomer units) included in the shell portion of the polymer (A) are taken to be 100 mass% is preferably 0.1 mass% or more, more preferably 0.4 mass% or more, and even more preferably 0.7 mass% or more, and is preferably 15 mass% or less, more preferably 10 mass% or less, and even more preferably 5 mass% or less. By setting the proportion constituted by an acid group-containing monomer unit within any of the ranges set forth above, dispersibility of the polymer (A) can be improved, and battery members can be even more strongly adhered via an adhesive layer.

The shell portion of the polymer (A) can also include a hydroxy group-containing monomer unit.

Examples of hydroxy group-containing monomers that can form a hydroxy group-containing monomer unit of the shell portion of the polymer (A) include the same monomers as the hydroxy group-containing monomers that can be used to form the core portion of the polymer (A).

In a case in which the shell portion of the polymer (A) includes a hydroxy group-containing monomer unit, the proportion constituted by the hydroxy group-containing monomer unit in the shell portion of the polymer (A) when all repeating units (all monomer units) included in the shell portion of the polymer (A) are taken to be 100 mass% is preferably 0.1 mass% or more, more preferably 0.4 mass% or more, and even more preferably 0.7 mass% or more, and is preferably 15 mass% or less, more preferably 10 mass% or less, and even more preferably 5 mass% or less. By setting the proportion constituted by a hydroxy group-containing monomer unit within any of the ranges set forth above, dispersibility of the polymer (A) can be further improved, and battery members can be even more strongly adhered via an adhesive layer.

The shell portion of the polymer (A) can also include a cross-linkable monomer unit. Examples of cross-linkable monomers that can form a cross-linkable monomer unit of the shell portion of the polymer (A) include the same monomers as given as examples of cross-linkable monomers that can be used for the core portion of the polymer (A). Of these cross-linkable monomers, di(meth)acrylic acid ester monomers and divinyl monomers are preferable, and allyl methacrylate is more preferable. One cross-linkable monomer may be used individually, or two or more cross-linkable monomers may be used in combination in a freely selected ratio.

The proportion constituted by a cross-linkable monomer unit in the shell portion of the polymer (A) when all repeating units (all monomer units) included in the shell portion of the polymer (A) are taken to be 100 mass% is preferably 0.05 mass% or more, more preferably 0.1 mass% or more, and even more preferably 0.2 mass% or more, and is preferably 4 mass% or less, more preferably 3 mass% or less, and even more preferably 2 mass% or less.

-Glass-transition temperature of shell portion-

The glass-transition temperature of the shell portion of the polymer (A) is preferably -50°C or higher, more preferably -45°C or higher, and even more preferably -40°C or higher, and is preferably 60°C or lower, more preferably 50°C or lower, and even more preferably 40°C or lower. When the glass-transition temperature of the shell portion of the polymer (A) is not lower than any of the lower limits set forth above, it is possible to inhibit deterioration of rate characteristics in a secondary battery produced using the presently disclosed slurry for an adhesive layer. Moreover, when the glass-transition temperature of the shell portion of the polymer (A) is not higher than any of the upper limits set forth above, an adhesive layer can be provided with good adhesiveness, and the formation of defective products can be further inhibited during production of a secondary battery using the presently disclosed slurry for an adhesive layer.

The glass-transition temperatures of the core portion and the shell portion of the polymer (A) can be adjusted by, for example, altering the types and proportions of monomers used to produce the core portion and the shell portion.

The polymer (A) may include any constituent elements other than the core portion and the shell portion set forth above so long as the expected effects are not significantly lost. Specifically, the polymer (A) may, for example, include a portion inside of the core portion that is formed of a different polymer to the core portion. In one specific example, a residual seed particle may be present inside of the core portion in a situation in which seed particles have been used in production of the polymer (A) by seeded polymerization. However, from a viewpoint of more noticeably displaying the expected effects, it is preferable that the polymer (A) is composed of only the core portion and the shell portion.

[Proportion of tetrahydrofuran (THF) insoluble content]

The proportion of tetrahydrofuran (THF) insoluble content in the polymer (A) is preferably 80 mass% or more, more preferably 82 mass% or more, and even more preferably 85 mass% or more. When the proportion of THF-insoluble content in the polymer is not less than any of the lower limits set forth above, it is possible to further inhibit deterioration of rate characteristics in a secondary battery produced using the presently disclosed slurry for an adhesive layer.

Note that the "proportion of THF-insoluble content" referred to in the present disclosure can be measured by a measurement method described in the EXAMPLES section of the present specification. Moreover, the proportion of THF-insoluble content in the polymer (A) can be adjusted by, for example, altering the types and proportions of monomers used to produce the polymer (A).

[Volume-average particle diameter]

The volume-average particle diameter of the polymer (A) is preferably 100 nm or more, more preferably 150 nm or more, and even more preferably 180 nm or more, and is preferably 400 nm or less, more preferably 350 nm or less, and even more preferably 300 nm or less. When the volume-average particle diameter of the polymer (A) is not less than any of the lower limits set forth above, reduction of process adhesiveness can be further inhibited during production of a secondary battery using the presently disclosed slurry for an adhesive layer. Moreover, when the volume-average particle diameter of the polymer (A) is not more than any of the upper limits set forth above, reduction of ejection performance of the slurry for an adhesive layer can be inhibited during application of the presently disclosed slurry for an adhesive layer by an inkjet method.

Note that the "volume-average particle diameter" referred to in the present disclosure can be measured by a method described in the EXAMPLES section of the present specification. Moreover, the volume-average particle diameter of the polymer (A) can be adjusted by, for example, altering the types and amounts of a polymerization initiator and/or an emulsifier used in production of the polymer (A).

[Degree of swelling in electrolyte solution]

The degree of swelling in electrolyte solution of the polymer (A) is preferably a factor of 1.01 or more, more preferably a factor of 1.1 or more, and even more preferably a factor of 1.2 or more, and is preferably a factor of 20 or less, more preferably a factor of 10 or less, and even more preferably a factor of 5 or less. When the degree of swelling in electrolyte solution of the polymer (A) is not less than any of the lower limits set forth above, reduction of process adhesiveness can be more effectively inhibited during production of a secondary battery using the presently disclosed slurry for an adhesive layer. Moreover, when the degree of swelling in electrolyte solution of the polymer (A) is not more than any of the upper limits set forth above, deterioration of rate characteristics can be further inhibited in a secondary battery produced using the presently disclosed slurry for an adhesive layer.

Note that the "degree of swelling in electrolyte solution" referred to in the present disclosure can be measured by a measurement method described in the EXAMPLES section of the present specification. Moreover, the degree of swelling in electrolyte solution of the polymer (A) can be adjusted by, for example, altering the types and proportions of monomers used to produce the polymer (A).

<Production method of polymer>

The polymer (A) can be produced by polymerizing the monomers described above. The method of polymerization is not specifically limited and can be emulsion polymerization, suspension polymerization, bulk polymerization, or solution polymerization, for example. Moreover, a polymer (A) that has the core-shell structure described above can be produced by, for example, performing stepwise polymerization in which monomers for forming the core portion of the polymer (A) and monomers for forming the shell portion of the polymer (A) are used and in which the ratio of these monomers is changed over time. Specifically, the polymer (A) having the core-shell structure can be produced by continuous, multi-step emulsion polymerization or multi-step suspension polymerization in which a polymer of a preceding step is sequentially covered by a polymer of a subsequent step.

The following describes one example of a case in which the polymer (A) having the core-shell structure is obtained by multi-step emulsion polymerization.

In the polymerization, an anionic surfactant such as sodium dodecylbenzenesulfonate, sodium dodecyl sulfate, or sodium lauryl sulfate, a non-ionic surfactant such as polyoxyethylene nonylphenyl ether or sorbitan monolaurate, or a cationic surfactant such as octadecylamine acetate may be used as an emulsifier in accordance with a standard method. Moreover, a peroxide such as t-butyl peroxy-2-ethylhexanoate, potassium persulfate, or cumene peroxide, or an azo compound such as 2,2'-azobis(2-methyl-N-(2-hydroxyethyl)-propionamide) or 2,2'-azobis(2-amidinopropane) hydrochloride may be used as a polymerization initiator.

The polymerization procedure involves initially mixing monomers for forming the core portion of the polymer (A) and the emulsifier and performing emulsion polymerization as one batch to obtain a particulate polymer that forms the core portion of the polymer (A). The polymer (A) having the core-shell structure described above can then be obtained by performing polymerization of monomers for forming the shell portion of the polymer (A) in the presence of the particulate polymer that forms the core portion of the polymer (A).

In a case in which a polymer (A) in which a shell portion partially covers an outer surface of a core portion is to be produced, monomers for forming the shell portion of the polymer (A) are preferably supplied into the polymerization system continuously or divided into a plurality of portions. By supplying the monomers for forming the shell portion of the polymer (A) into the polymerization system continuously or in portions, a polymer forming the shell portion of the polymer (A) is formed as particles that bond to the core portion to thereby enable formation of a shell portion that partially covers the core portion.

<Organic coloring material>

No specific limitations are placed on the organic coloring material so long as it is an organic material that can impart color to an adhesive layer formed using the presently disclosed slurry for an adhesive layer. The organic coloring material may be a water-soluble coloring such as vitamin B2, an organic coloring pigment, or the like, for example.

«Organic coloring pigment»

Examples of organic coloring pigments that can be used include, but are not specifically limited to, organic coloring pigments that display a black color, blue color, yellow color, red color, green color, orange color, purple color, white color, or the like.

Examples of organic coloring pigments that display a black color include oil black.

Examples of organic coloring pigments that display a blue color include fused polycyclic compounds such as phthalocyanine compounds, derivatives of phthalocyanine compounds, anthraquinone compounds, and quinacridone quinone compounds, with more specific examples including C.I. Pigment Blue 1, 7, 15:1, 15:2, 15:3, 15:4, 60, 62, and 66.

Examples of organic coloring pigments that display a yellow color or a red color include azo pigments such as monoazo pigments and disazo pigments, and fused polycyclic pigments.

More specific examples of organic coloring pigments that display a yellow color include C.I. Pigment Yellow 3, 12, 13, 14, 15, 17, 24, 60, 62, 65, 73, 74, 75, 83, 93, 97, 99, 100, 101, 104, 108, 117, 120, 123, 138, 139, 148, 150, 151, 154, 155, 156, 166, 169, 173, 176, 177, 179, 180, 181, 183, 185, 186, 191, 192, 193, 199, and 213.

Moreover, examples of organic coloring pigments that display a red color include C.I. Pigment Red 2, 3, 5, 6, 7, 17, 23, 31, 48:2, 48:3, 48:4, 57:1, 58, 60, 63, 64, 68, 81:1, 83, 87, 88, 89, 90, 112, 114, 122, 123, 144, 146, 149, 150, 163, 166, 169, 170, 177, 184, 185, 187, 202, 206, 207, 209, 220, 221, 251, and 254.

Examples of organic coloring pigments that display a green color include Pigment Green B, C.I. Pigment Green 7, and Malachite Green Lake.

Examples of organic coloring pigments that display an orange color include Permanent Orange GTR, Pyrazolone Orange, Indanthrene Brilliant Orange RK, Benzidine Orange G, Indanthrene Brilliant Orange GK, and C.I. Pigment Orange 31 and 40.

Examples of organic coloring pigments that display a purple color include Fast Violet B and Methyl Violet Lake.

Examples of organic coloring pigments that display a white color include hollow particles and solid particles formed of acrylic acid esters.

The organic coloring material preferably displays a different color from a substrate, such as an electrode substrate, from a viewpoint of clearly distinguishing between the substrate and an adhesive layer formed using the presently disclosed slurry for an adhesive layer, and more preferably displays a color other than a black color or a white color.

Moreover, one organic coloring material may be used individually, or two or more organic coloring materials may be used in combination in a freely selected ratio. The organic coloring material can be produced by any commonly known method without any specific limitations. Moreover, a commercially available product may be used as the organic coloring material.

Furthermore, the organic coloring material preferably includes an organic coloring material that can form a metal complex with a metal ion (hereinafter, also referred to as a "complex-forming organic coloring material"). More specifically, the complex-forming organic coloring material is preferably an organic coloring material that can impart metal ion trapping ability to an adhesive layer in a state in which the organic coloring material is contained in the adhesive layer. Note that it is possible to judge whether an adhesive layer containing an organic coloring material can display metal ion trapping ability by, for example, judging whether a metal ion trapping amount is 100 ppm or more when measurement is performed by a method described in the EXAMPLES section of the present specification. When the organic coloring material includes a complex-forming organic coloring material, metal ions that have eluted into electrolyte solution from a positive electrode active material or the like are trapped by forming a metal complex with the complex-forming organic coloring material during production of a secondary battery using the slurry for a secondary battery adhesive layer. Consequently, the amount of metal ions that have eluted into electrolyte solution can be reduced, and thus deterioration of battery characteristics such as cycle characteristics can be inhibited in a secondary battery.

From a viewpoint of improving cycle characteristics of a secondary battery, the complex-forming organic coloring material is preferably an organic coloring material that can form a metal complex with a polyvalent metal ion, more preferably an organic coloring material that can form a metal complex with a metal ion belonging to period 4 of the periodic table, and even more preferably an organic coloring material that can form a metal complex with a manganese ion, a cobalt ion, or a nickel ion.

The complex-forming organic coloring material may, for example, be a fused polycyclic compound such as a phthalocyanine compound, an anthraquinone compound, or a quinacridone quinone compound such as previously described.

Although no specific limitations are placed on the proportional content of a complex-forming organic coloring material among the organic coloring material in a case in which the organic coloring material includes a complex-forming organic coloring material, the proportional content of the complex-forming organic coloring material per 100 parts by mass of the total amount of the organic coloring material is preferably 80 parts by mass or more, more preferably 90 parts by mass or more, and even more preferably 100 parts by mass.

[Solubility]

The solubility in electrolyte solution at 25°C of the organic coloring material is preferably 5 mass% or less, more preferably 3 mass% or less, even more preferably 1 mass% or less, and particularly preferably 0 mass% (i.e., the organic coloring material is particularly preferably insoluble in electrolyte solution). When the solubility in 25°C electrolyte solution of the organic coloring material is 5 mass% or less, it is possible to cause good cycle characteristics to be displayed in a secondary battery produced using the presently disclosed slurry for an adhesive layer.

[Proportional content of organic coloring material]

The proportional content of the organic coloring material in the slurry for an adhesive layer is required to be 0.1 parts by mass or more per 100 parts by mass of the polymer (A), and is preferably 0.5 parts by mass or more, and more preferably 0.7 parts by mass or more per 100 parts by mass of the polymer (A). Moreover, the proportional content of the organic coloring material in the slurry for an adhesive layer is required to be 50 parts by mass or less per 100 parts by mass of the polymer (A), and is preferably 40 parts by mass or less, and more preferably 30 parts by mass or less per 100 parts by mass of the polymer (A). Through the proportional content of the organic coloring material in the slurry for an adhesive layer being 0.1 parts by mass or more per 100 parts by mass of the polymer (A), it is possible to simply detect the position of an adhesive layer and to cause the display of excellent cycle characteristics in a secondary battery produced using the presently disclosed slurry for an adhesive layer. Moreover, when the proportional content of the organic coloring material in the slurry for an adhesive layer is 50 parts by mass or less, secondary battery performance and adhesive layer adhesiveness are even better, which makes it possible to sufficiently inhibit the formation of defective products in production of a secondary battery.

<Water>

The water contained in the slurry for an adhesive layer is not specifically limited so long as it is an amount of water than enables dissolution or dispersion of components in the slurry for an adhesive layer, and is preferably adjusted such that the solid content concentration of the slurry for an adhesive layer is preferably 30 mass% or less, and more preferably 15 mass% or less. When the solid content concentration of the slurry for an adhesive layer is 30 mass% or less, it is possible to improve ejection performance of the slurry for an adhesive layer during application using an inkjet method.

<Other components>

Examples of other components that can optionally be contained in the slurry for an adhesive layer include components other than the above-described polymer (A), organic coloring material, and water without any specific limitations. For example, a polymer (B) serving as a binder other than the previously described polymer (A), known additives, and so forth can be contained as other components. In a case in which the slurry for an adhesive layer contains a polymer (B), the polymer (A) normally has the previously described core-shell structure and the polymer (B) normally has a non-core-shell structure.

«Polymer (B)»

No specific limitations are placed on the polymer (B) so long as it is a polymer having a different chemical composition from the previously described polymer (A). For example, the polymer (B) may be a fluoropolymer such as polyvinylidene fluoride (PVdF); a conjugated diene polymer such as styrene-butadiene copolymer (SBR) or acrylonitrile-butadiene copolymer (NBR); a hydrogenated product of a conjugated diene polymer; a polymer that includes a (meth)acrylic acid alkyl ester monomer unit (acrylic polymer); or a vinyl alcohol polymer such as polyvinyl alcohol (PVOH). Note that one polymer (B) may be used individually, or two or more polymers (B) may be used in combination in a freely selected ratio.

-Glass-transition temperature of polymer (B)-

The glass-transition temperature of the polymer (B) is preferably 20°C or lower, more preferably 15°C or lower, and even more preferably 10°C or lower. When the glass-transition temperature of the polymer (B) is 20°C or lower, dusting from an adhesive layer can be further inhibited in an adhesive layer that is formed using the presently disclosed slurry for an adhesive layer.

-Proportional content of polymer (B)-

The proportional content of the polymer (B) relative to 100 mass% of the polymer (A) is preferably 1 mass% or more, more preferably 5 mass% or more, and even more preferably 10 mass% or more, and is preferably 30 mass% or less, more preferably 25 mass% or less, and even more preferably 20 mass% or less. When the proportional content of the polymer (B) is not less than any of the lower limits set forth above, dusting from an adhesive layer can be sufficiently inhibited in an adhesive layer that is formed using the presently disclosed slurry for an adhesive layer. Moreover, when the proportional content of the polymer (B) is not more than any of the upper limits set forth above, deterioration of secondary battery rate characteristics can be more sufficiently inhibited in a secondary battery that is produced using the presently disclosed adhesive slurry.

-Production method of polymer (B)-

The polymer (B) can be produced by performing emulsion polymerization of a monomer mixture that contains monomers for forming the polymer (B), for example, but is not specifically limited to being produced in this manner. A commonly known emulsion polymerization method can be adopted without any specific limitations as the method by which emulsion polymerization is performed.

«Additives»

Examples of known additives that can be used include, but are not specifically limited to, components such as surface tension modifiers, dispersants, viscosity modifiers, reinforcing materials, and additives for electrolyte solution. These additives are not specifically limited so long as they do not affect battery reactions and may be selected from commonly known additives such as those described in WO2012/115096A1, for example. One of these additives may be used individually, or two or more of these additives may be used in combination in a freely selected ratio.

<Viscosity of slurry for non-aqueous secondary battery adhesive layer>

The viscosity (static viscosity) of the presently disclosed slurry for an adhesive layer is preferably 1 mPa·s or more, more preferably 2 mPa·s or more, and even more preferably 5 mPa·s or more, and is preferably 30 mPa·s or less, and more preferably 10 mPa·s or less. When the viscosity of the slurry for an adhesive layer is not less than any of the lower limits set forth above, immobility of the slurry for an adhesive layer on a substrate can be improved. Moreover, when the viscosity of the slurry for an adhesive layer is not more than any of the upper limits set forth above, it is possible to further improve ejection performance of the slurry for an adhesive layer during application of the slurry for an adhesive layer using an inkjet method.

Note that the "viscosity" referred to in the present disclosure can be measured by a method described in the EXAMPLES section of the present specification.

<Production method of slurry for non-aqueous secondary battery adhesive layer>

The presently disclosed slurry for an adhesive layer can be produced by mixing the polymer (A), the organic coloring material, water, and the optional polymer (B) and other components, for example, but is not specifically limited to being produced in this manner. The method of mixing is not specifically limited, and mixing can be performed using a typical mixing device such as a stirring vessel, a ball mill, a sand mill, a bead mill, a pigment disperser, an ultrasonic disperser, a grinding machine, a homogenizer, a planetary mixer, or a FILMIX, for example. Although no specific limitations are placed on the mixing conditions, the mixing is normally performed in a range of from room temperature to 80°C for a period of from 10 minutes to several hours.

(Adhesive layer-equipped battery member for non-aqueous secondary battery)

The presently disclosed adhesive layer-equipped battery member for a secondary battery includes a substrate and an adhesive layer formed at at least one surface of the substrate, wherein the substrate is a separator substrate or an electrode substrate, and the adhesive layer is a dried product of the slurry for a non-aqueous secondary battery adhesive layer set forth above. The substrate on which the adhesive layer has been formed in the presently disclosed adhesive layer-equipped battery member can adhere well to an adhesion target member via the adhesive layer. The presently disclosed battery member for a secondary battery can be used as an adhesive layer-equipped separator for a secondary battery in a case in which the substrate is a separator substrate and can be used as an adhesive layer-equipped electrode for a secondary battery in a case in which the substrate is an electrode substrate.

<Substrate>

«Separator substrate»

The separator substrate can be any known separator substrate that can be used in the field of secondary batteries without any specific limitations. Moreover, the separator substrate may have a porous membrane layer formed at one surface or both surfaces thereof.

Note that the separator substrate and the porous membrane layer can be any separator substrate and porous membrane layer that can be used in the field of secondary batteries, such as any of those described in JP2012-204303A or JP2013-145763A, for example, without any specific limitations. The porous membrane layer formed on the separator substrate may be a layer that contains non-conductive particles such as described in JP2013-145763A, for example.

«Electrode substrate»

The electrode substrate can be any known electrode substrate that can be used in the field of secondary batteries without any specific limitations. For example, an electrode substrate having an electrode mixed material layer formed at one surface or both surfaces of a current collector or an electrode substrate further having a porous membrane layer formed on an electrode mixed material layer can be used as the electrode substrate.

Note that the current collector, the electrode mixed material layer, and the porous membrane layer can be any current collector, electrode mixed material layer, and porous membrane layer that can be used in the field of secondary batteries, such as any of those described in JP2013-145763A, for example, without any specific limitations.

<Adhesive layer>

The adhesive layer formed at at least one surface of the substrate described above is a dried product of the presently disclosed slurry for an adhesive layer. In other words, the adhesive layer contains at least a polymer derived from the polymer (A) and an organic coloring material, and can optionally contain a polymer derived from the polymer (B) and/or other components. Although the adhesive layer may contain water that remains without being vaporized through drying, the water content of the adhesive layer is preferably 5 mass% or less, more preferably 3 mass% or less, even more preferably 1 mass% or less, particularly preferably 0.5 mass% or less, and most preferably 0 mass% (i.e., below the limit of detection).

The adhesive layer may be formed uniformly over the entirety of a surface of the substrate where the adhesive layer is formed (hereinafter, referred to as a "formation surface"), or may be formed in an array such as to have a specific pattern such as a striped pattern, a dotted pattern, or a lattice pattern in plan view.

The cross-sectional shape of the adhesive layer can be a protruding shape, a protruding/depressed shape, or a depressed shape without any specific limitations, of which, a protruding/depressed shape is preferable from a viewpoint of even more strongly adhering the substrate to an adhered member (for example, an electrode) via the adhesive layer. Note that the cross-sectional shape of the adhesive layer can be altered by, for example, adjusting the drying conditions in formation of the adhesive layer using the presently disclosed slurry for an adhesive layer.

The thickness of the adhesive layer that has been formed on the substrate is preferably 0.1 $\mu$m or more, more preferably 0.3 $\mu$m or more, and even more preferably 0.5 $\mu$m or more, and is preferably 3 $\mu$m or less, more preferably 1.5 $\mu$m or less, and even more preferably 1 $\mu$m or less. When the thickness of the adhesive layer is not less than any of the lower limits set forth above, sufficient strength of the adhesive layer can be ensured. Moreover, when the thickness of the adhesive layer is not more than any of the upper limits set forth above, low-temperature output characteristics can be further improved in a secondary battery that includes the presently disclosed battery member for a secondary battery.

In a case in which the adhesive layer is formed by an inkjet method, the formed amount of the adhesive layer is preferably 0.1 g/m$^2$ or more, and is preferably 100 g/m$^2$ or less, more preferably 50 g/m$^2$ or less, and even more preferably 10 g/m$^2$ or less. When the formed amount of the adhesive layer is 0.1 g/m$^2$ or more, the battery member for a secondary battery and an adhesion target member can be more strongly adhered via the adhesive layer. On the other hand, when the formed amount of the adhesive layer is 100 g/m$^2$ or less, increased battery resistance can be inhibited in a secondary battery that includes the presently disclosed battery member for a secondary battery, and the secondary battery can be caused to display good output characteristics.

Note that the "formed amount of the adhesive layer" referred to in the present disclosure is the amount of the slurry for a secondary battery adhesive layer that is required to form the adhesive layer per unit area of the formation surface, and can be calculated by dividing the mass of the slurry for an adhesive layer that is formed on the formation surface by the area of the formation surface on which the adhesive layer is formed.

In a case in which the adhesive layer is formed in a dotted form at one or more locations, and preferably at two or more locations on the formation surface, the size of the adhesive layer per one formed dot is preferably 25 $\mu$m$^2$ or more, more preferably 50 $\mu$m$^2$ or more, and even more preferably 100 $\mu$m$^2$ or more, and is preferably 250,000 $\mu$m$^2$ or less, more preferably 200,000 $\mu$m$^2$ or less, and even more preferably 100,000 $\mu$m$^2$ or less. When the size of the adhesive layer per one dot is 25 $\mu$m$^2$ or more, the battery member for a secondary battery and an adhesion target member can be even more strongly adhered via the adhesive layer. Moreover, when the size of the adhesive layer per one dot is 250,000 $\mu$m$^2$ or less, the battery member for a secondary battery can be efficiently produced.

Note that the size of the adhesive layer per one dot described above can be adjusted by altering the amount of the presently disclosed slurry for a secondary battery adhesive layer that is supplied to the formation surface, the shape of the adhesive layer, and the range of the adhesive layer. Specifically, in a case in which the adhesive layer is formed by an inkjet method using the presently disclosed slurry for a secondary battery adhesive layer, for example, the size per one dot can be adjusted by altering the gradation of ejection of the slurry for a secondary battery adhesive layer from nozzles of an inkjet head (i.e., the number of ejections at the same point).

(Production method of battery member for non-aqueous secondary battery)

No specific limitations are placed on the method by which the battery member for a secondary battery is produced. For example, the battery member for a secondary battery can be produced by a method including an application step for a battery member of applying the presently disclosed slurry for a secondary battery adhesive layer onto a substrate and a drying step for a battery member of drying the slurry for a secondary battery adhesive layer that has been applied onto the substrate to form an adhesive layer.

<Application step for battery member>

In the application step for a battery member, the presently disclosed slurry for an adhesive layer is applied onto at least one surface of a substrate. Note that in a case in which the slurry for an adhesive layer contains a complex-forming organic coloring material, the substrate onto which the slurry for an adhesive layer is applied is preferably a separator substrate from a viewpoint of obtaining a sufficient metal ion trapping effect through the complex-forming organic coloring material.

In the application step for a battery member, the method by which the slurry for an adhesive layer is applied onto the substrate can be a method such as an inkjet, gravure coating, direct roll coating, or spray coating method without any specific limitations. Of these methods, application by an inkjet method is preferable from a viewpoint of ease of adhesive layer pattern formation.

<Drying step for battery member>

In the drying step for a battery member, the slurry for a secondary battery adhesive layer that has been applied onto the substrate is dried to form an adhesive layer composed of a dried product of the slurry for an adhesive layer.

The method by which the slurry for an adhesive layer is dried is not specifically limited and can be a method using a heating device such as a heater, a dryer, or a heat roller. The temperature during drying of the substrate that has been coated with the slurry for an adhesive layer is not specifically limited but is preferably 0°C or higher, more preferably 10°C or higher, and even more preferably 15°C or higher, and is preferably 200°C or lower, more preferably 150°C or lower, and even more preferably 100°C or lower. A temperature of 0°C or higher during drying can sufficiently increase the drying rate. Moreover, a temperature of 200°C or lower during drying can improve the shape of the adhesive layer that is obtained after drying and enables good adhesion of the battery member for a secondary battery and an adhesion target member.

(Method of producing laminate for non-aqueous secondary battery)

The presently disclosed method of producing a laminate for a non-aqueous secondary battery is a method that uses the presently disclosed slurry for an adhesive layer and includes:

(1) an application step of applying the presently disclosed slurry for an adhesive layer onto a substrate;
(2) a drying step of drying the slurry for an adhesive layer that has been applied onto the substrate to form an adhesive layer;
(3) a detection step of detecting a position of the slurry for an adhesive layer that has been applied onto the substrate and performing a suitability judgment for a state of the adhesive layer; and
(4) an adhering step of adhering the substrate on which the adhesive layer has been formed and an adhesion target member in a case in which the state of the adhesive layer is judged to be suitable.

The following provides a description of a case in which the steps (1) to (4) described above are all implemented on a single production line. It should be noted, however, that the presently disclosed method of producing a laminate for a secondary battery is not limited to the method described below.

<(1) Application step>

In the application step, the presently disclosed slurry for an adhesive layer is applied onto a substrate. The substrate may be either or both of a separator substrate and an electrode substrate. Moreover, the substrate can be any of the substrates that were described in the "Adhesive layer-equipped battery member for non-aqueous secondary battery" section without any specific limitations. Moreover, any of the conditions that were described in the "Production method of battery member for non-aqueous secondary battery" section can be adopted as the application conditions and the application method.

<(2) Drying step>

In the drying step, the slurry for an adhesive layer that has been applied onto the substrate is dried to form an adhesive layer that is composed of a dried product of the slurry for an adhesive layer. Any of the drying methods and drying times that were described in the "Production method of battery member for non-aqueous secondary battery" section can be adopted as the drying conditions of the slurry for an adhesive layer without any specific limitations.

<(3) Detection step>

In the detection step, the position of the adhesive layer that has been formed on the substrate is detected and a suitability judgment is performed for a state of the adhesive layer. According to the present disclosure, the adhesive layer is formed from a dried product of the presently disclosed slurry for an adhesive layer and thus is colored by the organic coloring material that is contained in the slurry for an adhesive layer. Therefore, according to the present disclosure, the position of the adhesive layer can be simply detected based on the presence or absence of color of the adhesive layer. Note that judgment criteria for whether or not the state of the adhesive layer is suitable can be set as appropriate. For example, the amount of the adhesive layer formed per unit area of a formation surface can be used as a judgment criterion. Moreover, the method of detection of the adhesive layer is not specifically limited but is preferably detection using an image processing device such as a color image detection device from a viewpoint of high sensitivity detection.

<(4) Adhering step>

In the adhering step, the substrate on which the adhesive layer has been formed and an adhesion target member are adhered via the adhesive layer in a case in which the state of the adhesive layer has been judged to be suitable. As a result, a laminate for a secondary battery can be obtained. The method by which the substrate on which the adhesive layer has been formed and the adhesion target member are adhered is not specifically limited but is preferably adhering through pressure application using mold pressing, roll pressing, or the like. The conditions of adhering through pressure application (pressure, temperature, time, etc.) can be altered as appropriate depending on the glass-transition temperature of the polymer (A) contained in the slurry for an adhesive layer, for example. The adhesion target member is not specifically limited and may be a separator substrate or the like in a case in which the substrate is an electrode substrate and may be an electrode substrate or the like in a case in which the substrate is a separator substrate, for example.

Note that in a case in which the state of the adhesive layer has not been judged to be suitable in the detection step, the adhering step may be performed by temporarily suspending the production line and then removing a substrate on which an adhesive layer has not been formed from the production line or excluding a section where an adhesive layer has not been formed on a substrate.

(Method of producing non-aqueous secondary battery)

A feature of the presently disclosed method of producing a non-aqueous secondary battery is that a laminate for a non-aqueous secondary battery produced by the method of producing a laminate for a non-aqueous secondary battery set forth above is used therein. More specifically, a secondary battery obtained by the presently disclosed production method includes a positive electrode, a negative electrode, a separator, and an electrolyte solution, for example, and includes the laminate for a secondary battery set forth above as a positive electrode and a separator that are adhered via an adhesive layer and/or as a negative electrode and a separator that are adhered via an adhesive layer. The secondary battery obtained by the presently disclosed production method can display excellent process adhesiveness, cycle characteristics, and rate characteristics as a result of a separator and a substrate (positive electrode or negative electrode) being well adhered through use of the presently disclosed slurry for an adhesive layer.

Note that in a case in which a positive electrode, negative electrode, separator, or the like other than the laminate for a secondary battery set forth above is used in the presently disclosed method of producing a secondary battery, any known positive electrode, negative electrode, or separator that is used in a non-aqueous secondary battery can be used as the positive electrode, negative electrode, or separator. Moreover, any known electrolyte solution that is used in a non-aqueous secondary battery can be used as the electrolyte solution.

The electrolyte solution is normally an organic electrolyte solution obtained by dissolving a supporting electrolyte into an organic solvent. In a case in which the secondary battery is a lithium ion secondary battery, for example, a lithium salt can be used as the supporting electrolyte. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. Note that one supporting electrolyte may be used individually, or two or more supporting electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used in a case in which the secondary battery is a lithium ion secondary battery, for example, include carbonates such as dimethyl carbonate (DMC), ethylene carbonate (EC), diethyl carbonate (DEC), propylene carbonate (PC), butylene carbonate (BC), and ethyl methyl carbonate (EMC); esters such as $\gamma$-butyrolactone and methyl formate; ethers such as 1,2-dimethoxyethane and tetrahydrofuran; and sulfur-containing compounds such as sulfolane and dimethyl sulfoxide. Moreover, a mixture of these organic solvents may be used. Of these solvents, carbonates are preferable due to having high permittivity and a wide stable potential region.

The presently disclosed non-aqueous secondary battery can be produced by, for example, placing a laminate for a non-aqueous secondary battery produced by the presently disclosed method of producing a laminate for a non-aqueous secondary battery set forth above or a product obtained by stacking the laminate for a non-aqueous secondary battery with a positive electrode, negative electrode, separator, or the like other than the laminate for a non-aqueous secondary battery in a battery container after performing rolling, folding, or the like thereof, as necessary, in accordance with the battery shape, injecting the electrolyte solution into the battery container, and sealing the battery container.

In addition, an overcurrent preventing device such as a fuse or a PTC device, an expanded metal, a lead plate, or the like may be provided in the presently disclosed secondary battery, as necessary, in order to prevent internal pressure increase and occurrence of overcharging or overdischarging. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used for measurement and evaluation of glass-transition temperature, proportion of THF-insoluble content in a polymer, volume-average particle diameter, degree of swelling in electrolyte solution, solubility of a coloring material, viscosity (static viscosity) of a slurry for an adhesive layer, metal complex-forming ability, process adhesiveness, cycle characteristics, rate characteristics, and detectability.

<Glass-transition temperature>

The glass-transition temperatures (Tg) of polymers (A) and (B) were measured using a differential scanning calorimeter (EXSTAR DSC6220 produced by SII NanoTechnology Inc.). Specifically, a polymer (A) or (B) was dried from a water dispersion containing the polymer (A) or (B) produced in each example or comparative example in order to obtain a test sample, and 10 mg of the test sample was placed in an aluminum pan and was measured. Note that an empty aluminum pan was used as a reference. Measurement was then performed in a temperature range of -100°C to 500°C (heating rate: 10°C/min) to obtain a differential scanning calorimetry (DSC) curve. This measurement was performed in accordance with a method prescribed in JIS Z 8703. In the heating process, a temperature corresponding to an intersection point of a baseline directly before a heat absorption peak on the obtained DSC curve at which a derivative signal (DDSC) reached 0.05 mW/min/mg or more and a tangent to the DSC curve at a first inflection point to appear after the heat absorption peak was determined as the glass-transition temperature (°C). The results are shown in Table 1.

<Proportion of THF-insoluble content>

The proportion of THF-insoluble content in a polymer (A) was measured as described below.

A water dispersion having the polymer (A) dispersed in water was dried in an environment having a humidity of 50% and a temperature of 23°C to 25°C to produce a dry film of 3 ±0.3 mm in thickness. The dry film that had been produced was cut to a 5 mm square to prepare a dry film piece.

The dry film piece that had been prepared was precisely weighed and the determined weight of the dry film piece was defined as Wo.

Next, the dry film piece was immersed in 100 g of THF in an environment having a temperature of 23°C to 25°C for 24 hours so as to cause dissolution of the film piece. Thereafter, the remaining film piece was pulled out of the THF, was vacuum dried in an environment having a temperature of 105°C for 3 hours, and then the weight of the remaining film piece that was obtained (weight of insoluble content) was defined as Wi.

The proportion (%) of THF-insoluble content in the polymer was calculated by the following formula. The results are shown in Table 1.

$$\text{Proportion of THF-insoluble content (\%)} = (W_1/W_0) \times 100$$

<Volume-average particle diameter>

The volume-average particle diameter (D50) of a polymer (A) was measured by laser diffraction. Specifically, each water dispersion (solid content concentration: 0.1 mass%) containing a polymer (A) that was produced in the examples and comparative examples was used as a sample, and the particle diameter at which, in a particle size distribution (by volume) obtained using a laser diffraction particle diameter distribution analyzer (produced by Beckman Coulter, Inc.; product name: LS-230), cumulative volume calculated from a small diameter end of the distribution reached 50% was determined and was taken to be the volume-average particle diameter (D50). The results are shown in Table 1.

<Degree of swelling in electrolyte solution>

The degree of swelling in electrolyte solution of a polymer (A) was measured as described below.
Approximately 0.2 g of a dried polymer was pressed for 2 minutes under pressing conditions of 200°C and 5 MPa to obtain a film. The obtained film was cut to a 1 cm square to obtain a test specimen. The weight $W_{E0}$ of the test specimen was measured.
The test specimen was immersed in electrolyte solution at 60°C for 72 hours. Thereafter, the test specimen was removed from the electrolyte solution, electrolyte solution on the surface of the test specimen was wiped off, and the weight $W_{E1}$ of the test specimen after the immersion test was measured.
The degree of swelling S (factor) of the polymer in the electrolyte solution was determined from the obtained values of the weights $W_{E0}$ and $W_{E1}$ by $S = W_{E1}/W_{E0}$ and was taken to be the degree of swelling in electrolyte solution.
Note that the electrolyte solution mentioned above was a non-aqueous electrolyte solution obtained by dissolving $LiPF_6$ as a supporting electrolyte with a concentration of 1 M in a mixed solvent of ethylene carbonate (EC), diethyl carbonate (DEC), and vinylene carbonate (volume ratio: EC/DEC/VC = 68.5/30/1.5).

<Solubility>

The solubility of a coloring material was measured as described below.
After weighing 0.1 mg of a coloring material used in each example or comparative example into a flask, 10 mg of electrolyte solution was added into the flask. Note that a mixed solvent of ethylene carbonate (EC) and ethyl methyl carbonate (EMC) (volume ratio: EC/EMC = 1/1) was used as the electrolyte solution.
The flask was subjected to 10 minutes of ultrasonication and was subsequently left at rest at 25°C for 2 hours to settle.
Next, the contents of the flask were transferred to a vial container and were subjected to centrifugal separation (30 minutes at 5,000 rpm) to cause sedimentation of insoluble content.
The presence or absence of sediment in the vial container was visually checked. In a case in which sediment was confirmed, the sediment was filtered off and was dried at 60°C for 3 hours, and then the mass of the sediment was measured from the mass of the filter before and after filtration. The solubility was calculated by the following formula. Note that a judgment of "insoluble" was made in a case in which the solubility was 1% or less. The results are shown in Table 1.

$$\text{Solubility} = [(0.1 \ (\text{mg}) - \text{Mass of sediment (mg)})/\text{Mass of electrolyte solution (mg)}] \times 100(\%)$$

<Viscosity>

The viscosity $\eta_0$ (static viscosity) of a slurry for an adhesive layer was measured at 60 rpm and 25°C using a digital viscometer (DV-E produced by EKO Instruments Co., Ltd.). The results are shown in Table 1.

<Metal complex-forming ability>

A separator substrate on which a slurry for an adhesive layer had been applied was punched out with a size having an area of 100 $cm^2$ to obtain a test specimen. The mass (A) of the test specimen before trapping of transition metal ions was measured. Next, a separator substrate on which a slurry for an adhesive layer had not been applied was punched out with a size having an area of 100 $cm^2$, and the mass (B) thereof was measured. A value obtained by subtracting the mass (B) from the mass (A) was taken to be the mass (C) of an adhesive layer before trapping of transition metal ions.

Next, cobalt chloride (anhydrous) ($CoCl_2$), nickel chloride (anhydrous) (NiCh), and manganese chloride (anhydrous) (MnCh) were dissolved as transition metal ion sources in an electrolyte solution obtained by dissolving $LiPF_6$ as a supporting electrolyte with a concentration of 1 M in a solvent (ethyl methyl carbonate:ethylene carbonate = 70:30 (mass ratio)) so as to produce an electrolyte solution in which the concentration of each type of metal ion was 20 mass ppm, and thereby create a state in which transition metal ions were present in specific proportions as in a non-aqueous secondary battery.

Next, the test specimen described above was loaded into a glass vessel, 15 g of the electrolyte solution in which cobalt chloride, nickel chloride, and manganese chloride had been dissolved was added thereto, and the test specimen was immersed in the electrolyte solution and was left at rest at 25°C for 5 days.

Thereafter, the test specimen was removed from the electrolyte solution, was sufficiently washed with diethyl carbonate, and then diethyl carbonate attached to the surface of the test specimen was wiped off. The test specimen was then loaded into a Teflon® (Teflon is a registered trademark in Japan, other countries, or both) beaker, sulfuric acid and nitric acid (sulfuric acid:nitric acid = 0.1:2 (volume ratio)) were added thereto, and heating was performed by a hot plate until carbonization of the test specimen occurred. In addition, nitric acid and perchloric acid (nitric acid:perchloric acid = 2:0.2 (volume ratio)) were added, perchloric acid and hydrofluoric acid (perchloric acid:hydrofluoric acid = 2:0.2 (volume ratio)) were subsequently added, and heating was performed until white smoke was given off. Next, 20 mL of nitric acid and ultrapure water (nitric acid:ultrapure water = 0.5:10 (volume ratio)) were added, and heating was performed. After allowing cooling to occur, ultrapure water was added to adjust the total volume to 100 mL and obtain a transition metal ion solution containing transition metal ions.

An ICP mass spectrometer (ELAN DRS II produced by PerkinElmer) was used to measure the amounts of cobalt, nickel, and manganese in the obtained transition metal ion solution. The total amount of cobalt, nickel, and manganese in the transition metal ion solution was divided by the mass (C) of the adhesive layer before trapping of transition metal ions to calculate the transition metal content (mass ppm) in the test specimen, and the obtained value was taken to be a transition metal ion trapping amount of the adhesive layer.

An evaluation of "Yes" for metal complex-forming ability was made in a case in which the transition metal ion trapping amount for the adhesive layer was 100 ppm or more, whereas an evaluation of "No" for metal complex-forming ability was made in a case in which this amount was less than 100 ppm. The results are shown in Table 1.

<Process adhesiveness>

A positive electrode, a negative electrode, and a separator produced in each example or comparative example were each cut to 10 mm in width and 50 mm in length. A cut positive electrode and separator and a cut negative electrode and separator were stacked via an adhesive layer having an average thickness of 1 μm that was formed using a slurry for an adhesive layer. The obtained laminates were each pressed by roll pressing at 10 m/min with a temperature of 80°C and a load of 1 MPa so as to adhere the positive electrode and separator to each other and adhere the negative electrode and separator to each other to thereby obtain a test specimen A including a positive electrode and a separator and a test specimen B including a negative electrode and a separator.

These test specimens A and B were each placed with a surface at the current collector side of the electrode (positive electrode or negative electrode) facing downward, and cellophane tape (tape prescribed by JIS Z1522) was affixed to the surface of the electrode. Note that the cellophane tape was secured to a horizontal test stage in advance. The stress when the separator substrate on which the adhesive layer had been formed was peeled off by pulling one end of the separator substrate vertically upward at a pulling speed of 50 mm/min was measured. A total of three measurements were performed in this manner for test specimens A and also for test specimens B. An average value of the measured stresses was determined as the peel strength (N/m) and was evaluated by the following standard as process adhesiveness of an electrode substrate and a separator substrate adhered via an adhesive layer. The results are shown in Table 1.

A larger peel strength indicates better process adhesiveness.

A: Peel strength of 5 N/m or more
B: Peel strength of not less than 3 N/m and less than 5 N/m
C: Peel strength of not less than 1 N/m and less than 3 N/m
D: Peel strength of less than 1 N/m

<Cycle characteristics>

A produced lithium ion secondary battery was left at rest in a 25°C environment for 24 hours. The lithium ion secondary battery was subsequently subjected to a charge/discharge operation of charging to 4.35 V by a constant current-constant voltage (CC-CV) method at a charge rate of 1C (cut-off condition: 0.02C) and discharging to 3.0 V by a constant current (CC) method at a discharge rate of 1C in a 25°C environment, and the initial capacity Co was measured.

The same charge/discharge operation was performed repeatedly in a 50°C environment, and the capacity after 300 cycles was measured as Ci. A capacity maintenance rate $\Delta C$ (= (Ci/Co) $\times$ 100(%)) was calculated and was evaluated by the following standard. The results are shown in Table 1.

A higher value for the capacity maintenance rate $\Delta C$ indicates that the lithium ion secondary battery has less reduction of discharge capacity and better cycle characteristics.

A: Capacity maintenance rate $\Delta C$ of 90% or more

B: Capacity maintenance rate $\Delta C$ of not less than 85% and less than 90%

C: Capacity maintenance rate $\Delta C$ of not less than 80% and less than 85%

D: Capacity maintenance rate $\Delta C$ of less than 80%

<Rate characteristics>

A produced lithium ion secondary battery was charged to a cell voltage of 4.2 V and was subsequently discharged to 3.0 V by a 0.5C constant current method in a 25°C atmosphere. The initial discharge capacity C0 of the lithium ion secondary battery was measured.

The lithium ion secondary battery for which the initial discharge capacity had been measured was constant current charged to a battery voltage of 4.2 V at 0.2C and was then constant voltage charged at a voltage of 4.2 V until the charging current reached 0.02C in a 25°C atmosphere. Next, constant current discharging was performed to a battery voltage of 3.0 V at 3C, and the 3C capacity was determined. The value of {(3C capacity)/(initial discharge capacity CO)} $\times$ 100(%) was determined as a rate characteristic (output characteristic) and was evaluated by the following standard. The results are shown in Table 1.

A: Rate characteristic of 85% or more
B: Rate characteristic of not less than 80% and less than 85%
C: Rate characteristic of not less than 70% and less than 80%
D: Rate characteristic of not less than 65% and less than 70%

<Detectability>

The following device was used for detectability of an adhesive layer.
Device: "Optical Flaw Inspection System (MaxEye.CORE/320C)" produced by FUTEC Inc.

Camera: 8,000 pixel color digital camera
Lens: "F2.8/185" produced by Myutron Inc.
Width resolution: 0.03 mm (pixel)
Flow resolution: 0.055 mm/SCAN
Light source: LED line illumination
Inspection rate: 100 m/min

Specifically, a slurry feeder was used to apply a slurry for an adhesive layer onto a separator substrate having a width of 600 mm by an inkjet method so as to form a dotted adhesive layer having an average thickness of 1 $\mu$m. The device indicated above was used to perform detection of the adhesive layer, the diameter of the dotted adhesive layer (dot diameter) was measured by image detection, and the determined dot diameter was compared to an actual measured value. An evaluation was made by the following standard. The results are shown in Table 1.

Note that when the dot diameter determined by image detection is closer to the actual measured value, this indicates that the adhesive layer has higher detectability (i.e., the position of the adhesive layer can be simply detected).

A: Equal to actual measured value
B: Actual measured value $\pm$10%
C: Actual measured value $\pm$30% or more

(Example 1)

<Production of polymer (A)>

A polymer having a core-shell structure was produced as a polymer (A).

First, in core portion formation, 88 parts of styrene as an aromatic vinyl monomer, 6 parts of butyl acrylate as a (meth)acrylic acid ester monomer, 5 parts of methacrylic acid as an acid group-containing monomer, 1 part of ethylene glycol dimethacrylate as a cross-linkable monomer, 1 part of sodium dodecylbenzenesulfonate as an emulsifier, 150 parts of deionized water, and 0.5 parts of potassium persulfate as a polymerization initiator were loaded into a 5 MPa pressure-resistant vessel equipped with a stirrer, were sufficiently stirred, and were then heated to 60°C to initiate polymerization. At the point at which the polymerization conversion rate reached 96%, 80.7 parts of butyl acrylate as a (meth)acrylic acid ester monomer, 1 part of methacrylic acid as an acid group-containing monomer, 18 parts of styrene as an aromatic vinyl monomer, and 0.3 parts of allyl methacrylate as a cross-linkable monomer were continuously added for shell portion formation, and polymerization was continued under heating to 70°C. Cooling was performed to quench the reaction at the point at which the polymerization conversion rate reached 96% to yield a water dispersion containing a polymer (A).

<Production of polymer (B)>

A reactor including a stirrer was charged with 70 parts of deionized water, 0.15 parts of sodium lauryl sulfate (produced by Kao Corporation: product name: EMAL 2F) as an emulsifier, and 0.5 parts of ammonium persulfate, the gas phase was purged with nitrogen gas, and heating was performed to 60°C.

Meanwhile, a monomer mixture was obtained in a separate vessel by mixing 50 parts of deionized water, 0.5 parts of sodium dodecylbenzenesulfonate as an emulsifier, and 94 parts of butyl acrylate, 2 parts of acrylonitrile, 2 parts of methacrylic acid, 1 part of N-hydroxymethylacrylamide, and 1 part of allyl glycidyl ether as polymerizable monomers. The monomer mixture was continuously added to the reactor over 4 hours to carry out polymerization. The reaction was carried out at 60°C during this addition. Once the addition was completed, a further 3 hours of stirring was performed at 70°C to complete the reaction and thereby yield a water dispersion containing an acrylic polymer as a polymer (B).

<Production of slurry for non-aqueous secondary battery adhesive layer>

After mixing 100 parts in terms of solid content of the polymer (A) dispersion described above and 20 parts in terms of solid content of the polymer (B) dispersion described above in a stirring vessel, 1 part of phthalocyanine as an organic coloring material and 0.3 parts of carboxymethyl cellulose as a viscosity modifier were added and were mixed therewith. The resultant mixture was diluted with deionized water to obtain a slurry for a non-aqueous secondary battery adhesive layer (solid content concentration: 15%). The viscosity of the obtained slurry for an adhesive layer was measured.

<Production of positive electrode>

A slurry composition for a positive electrode was obtained by loading 100 parts of $LiCoO_2$ (volume-average particle diameter (D50): 12 $\mu$m) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder, and N-methylpyrrolidone into a planetary mixer such that the total solid content concentration was 70% and mixing these materials.

The obtained slurry composition for a positive electrode was applied onto aluminum foil of 20 $\mu$m in thickness serving as a current collector using a comma coater such as to have a thickness after drying of approximately 150 $\mu$m and was dried to obtain a positive electrode web. This drying was performed by conveying the aluminum foil inside a 60°C oven for 2 minutes at a speed of 0.5 m/min.

Thereafter, the positive electrode web was rolled using a roll press to obtain a positive electrode including a positive electrode mixed material layer.

<Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were sufficiently stirred and were then heated to 50°C to initiate polymerization. Cooling was performed to quench the reaction at the point at which the polymerization conversion rate reached 96% to yield a mixture containing a binder for a negative electrode mixed material layer (SBR). The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing the target binder for a negative electrode mixed material layer.

Next, 100 parts of artificial graphite (volume-average particle diameter: 15.6 $\mu$m) as a negative electrode active material, 1 part in terms of solid content of a 2% aqueous solution of carboxymethyl cellulose sodium salt (produced by Nippon Paper Industries Co., Ltd.; product name: MAC350HC) as a viscosity modifier, and deionized water were mixed, were adjusted to a solid content concentration of 68%, and were subsequently mixed at 25°C for 60 minutes. The solid content concentration was further adjusted to 62% with deionized water and a further 15 minutes of mixing was performed at 25°C. Deionized water and 1.5 parts in terms of solid content of the water dispersion containing the binder for a negative electrode mixed material layer described above were added to the resultant mixture, the final solid content concentration was adjusted to 52%, and a further 10 minutes of mixing was performed. The resultant mixture was subjected to a defoaming process under reduced pressure to yield a slurry composition for a negative electrode having good fluidity.

The obtained slurry composition for a negative electrode was applied onto copper foil of 20 $\mu$m in thickness serving as a current collector using a comma coater such as to have a thickness after drying of approximately 150 $\mu$m. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. This pre-pressing negative electrode web was rolled by a roll press to obtain a post-pressing negative electrode having a negative electrode mixed material layer thickness of 80 $\mu$m.

<Preparation of separator substrate>

A separator (product name: Celgard 2500) made of polypropylene (PP) was prepared as a separator substrate.

<Production of laminate for secondary battery>

The prepared slurry for an adhesive layer, positive electrode, negative electrode, and separator were used to obtain a laminate for a secondary battery having a stacking order of: positive electrode/adhesive layer (iii)/separator (A)/adhesive layer (ii)/negative electrode/adhesive layer (i)/separator (B).

Specifically, a slurry feeder was used to apply the slurry for an adhesive layer onto a surface of the negative electrode. The slurry for an adhesive layer that had been applied onto the surface of the negative electrode was then dried to form an adhesive layer (i) composed of a dried product of the slurry for an adhesive layer. Next, the negative electrode on which the adhesive layer (i) had been formed and a separator (B) were adhered under a pressure of 1 MPa to obtain a laminate (I) having a stacking order of: negative electrode/separator (B).

The slurry feeder was then used to apply the slurry for an adhesive layer onto a surface at the negative electrode side of the laminate (I). The slurry for an adhesive layer that had been applied onto the surface of the negative electrode was then dried to form an adhesive layer (ii) composed of a dried product of the slurry for an adhesive layer. Next, the laminate (I) on which the adhesive layer (ii) had been formed and a separator (A) were adhered under a pressure of 1 MPa to obtain a laminate (II) having a stacking order of: separator (A)/negative electrode/separator (B).

Moreover, the slurry feeder was used to apply the slurry for an adhesive layer onto a surface at the separator (A) side of the laminate (II). The slurry for an adhesive layer that had been applied onto the surface of the separator (A) was then dried to form an adhesive layer (iii) composed of a dried product of the slurry for an adhesive layer. Next, the laminate (II) on which the adhesive layer (iii) had been formed and the positive electrode were adhered under a pressure of 1 MPa to obtain a laminate for a secondary battery having a stacking order of: positive electrode/separator (A)/negative electrode/separator (B).

Note that an inkjet-type slurry feeder including an inkjet head (produced by Konica; product name: KM1024 (shear mode type)) was used as the slurry feeder. Moreover, the coating pattern was a diagonal striped shape, and the coating weight (formed amount) was 0.5 g/m$^2$. With regards to drying conditions, the drying temperature of the slurry for an adhesive layer was set as 70°C and the drying time was set as 1 second.

<Production of secondary battery>

The laminate for a secondary battery obtained as described above was cut to an appropriate size. Five cut laminates for a secondary battery were stacked and were pressed for 10 seconds at a temperature of 70°C and a pressure of 1 MPa to obtain a stack.

The produced stack was enclosed in an aluminum packing case serving as a battery case, and electrolyte solution (solvent: ethylene carbonate/diethyl carbonate/vinylene carbonate = 68.5/30/1.5 (volume ratio); electrolyte: $LiPF_6$ of 1 M in concentration) was injected into the aluminum packing case. An opening of the aluminum packing case was subsequently closed by heat sealing at 150°C to produce a stacked lithium ion secondary battery having a capacity of 800 mAh.

Cycle characteristics and rate characteristics were evaluated for the obtained lithium ion secondary battery. The results are shown in Table 1.

(Example 2)

A slurry for an adhesive layer was produced in the same way as in Example 1 with the exception that the proportional content of phthalocyanine as an organic coloring material in the slurry for an adhesive layer was changed as shown in Table 1. The obtained slurry for an adhesive layer was used to perform measurements and evaluations in the same way as in Example 1. The results are shown in Table 1.

(Example 3)

A slurry for an adhesive layer was produced in the same way as in Example 1 with the exception that a viscosity modifier was not used. The obtained slurry for an adhesive layer was used to perform measurements and evaluations in the same way as in Example 1. The results are shown in Table 1.

(Example 4)

A slurry for an adhesive layer was produced in the same way as in Example 1 with the exception that Pigment Red 17 was use instead of phthalocyanine as an organic coloring material. The obtained slurry for an adhesive layer was used to perform measurements and evaluations in the same way as in Example 1. The results are shown in Table 1.

(Example 5)

A slurry was produced in the same way as in Example 1 with the exception that Pigment Orange 40 was used instead of phthalocyanine as an organic coloring material. The obtained slurry for an adhesive layer was used to perform measurements and evaluations in the same way as in Example 1.
The results are shown in Table 1.

(Example 6)

A slurry for an adhesive layer was produced in the same way as in Example 1 with the exception that vitamin B2 was used instead of phthalocyanine as an organic coloring material. The obtained slurry for an adhesive layer was used to perform measurements and evaluations in the same way as in Example 1. The results are shown in Table 1.

(Comparative Example 1)

A slurry for an adhesive layer was produced in the same way as in Example 1 with the exception that the organic coloring material was changed to iron oxyhydroxide (FeOOH) as an inorganic coloring material. The obtained slurry for an adhesive layer was used to perform measurements and evaluations in the same way as in Example 1. The results are shown in Table 1.

(Comparative Example 2)

A slurry for an adhesive layer was produced in the same way as in Example 1 with the exception that an organic coloring material was not used. The obtained slurry for an adhesive layer was used to perform measurements and evaluations in the same way as in Example 1. The results are shown in Table 1.

Table 1

| | | | Example 1 | Example 2 | Example 3 | Example 4 | Example 5 | Example 6 | Comparative Example 1 | Comparative Example 2 |
|---|---|---|---|---|---|---|---|---|---|---|
| Slurry for non-aqueous secondary battery adhesive layer | Polymer (A) | Structure | Core-shell | Core-shell | Core-shell | Core-shell | Core-shell | Core-shell | Core-shell | Core-shell |
| | | Shell portion (Chemical composition) | BA/MAA/ST/AMA 80.7/1/18/0.3 | BA/MAA/ST/AMA 80.7/1/18/0.3 | BA/MAA/ST/AMA 80.7/1/18/0.3 | BA/MAA/ST/AMA 80.7/1/18/0.3 | BA/MAA/ST/AMA 80.7/1/18/0.3 | BA/MAA/ST/AMA 80.7/1/18/0.3 | BA/MAA/ST/AMA 80.7/1/18/0.3 | BA/MAA/ST/AMA 80.7/1/18/0.3 |
| | | Shell portion Glass-transition temperature [°C] | -34 | -34 | -34 | -34 | -34 | -34 | -34 | -34 |
| | | Core portion (Chemical composition) | ST/BA/MAA/EDMA 88/6/5/1 | ST/BA/MAA/EDMA 88/6/5/1 | ST/BA/MAA/EDMA 88/6/5/1 | ST/BA/MAA/EDMA 88/6/5/1 | ST/BA/MAA/EDMA 88/6/5/1 | ST/BA/MAA/EDMA 88/6/5/1 | ST/BA/MAA/EDMA 88/6/5/1 | ST/BA/MAA/EDMA 88/6/5/1 |
| | | Core portion Glass-transition temperature [°C] | 95 | 95 | 95 | 95 | 95 | 95 | 95 | 95 |
| | | Proportion of THF-insoluble content [%] | 85 | 85 | 85 | 85 | 85 | 85 | 85 | 85 |
| | | Volume-average particle diameter [nm] | 230 | 230 | 230 | 230 | 230 | 230 | 230 | 230 |
| | | Degree of swelling in electrolyte solution [factor] | 2 | 2 | 2 | 2 | 2 | 2 | 2 | 2 |
| | Coloring material | Organic coloring material Type | Phthalocyanine | Phthalocyanine | Phthalocyanine | Pigment Red 17 | Pigment Orange 40 | Vitamin B2 | - | - |
| | | Organic coloring material Content [parts by mass (per 100 parts by mass of polymer (A))] | 1 | 40 | 1 | 1 | 1 | 1 | - | - |
| | | Organic coloring material Solubility [mass%] | Insoluble | Insoluble | Insoluble | 4 | 2 | 100 | - | - |
| | | Inorganic coloring material Type | - | - | - | - | - | - | FeOOH | - |
| | | Inorganic coloring material Content [parts by mass (per 100 parts by mass of polymer (A))] | - | - | - | - | - | - | 1 | - |
| | Polymer (B) | Content [parts by mass (per 100 parts by mass of polymer (A))] | 20 | 20 | 20 | 20 | 20 | 20 | 20 | 20 |
| | | Glass-transition temperature [°C] | 5 | 5 | 5 | 5 | 5 | 5 | 5 | 5 |
| | | Chemical composition | Acrylic polymer | Acrylic polymer | Acrylic polymer | Acrylic polymer | Acrylic polymer | Acrylic polymer | Acrylic polymer | Acrylic polymer |
| | Other component | Viscosity modifier Type | CMC | CMC | - | CMC | CMC | CMC | CMC | CMC |
| | | Viscosity modifier Content [parts by mass (per 100 parts by mass of polymer (A))] | 0.3 | 0.3 | - | 0.3 | 0.3 | 0.3 | 0.3 | 0.3 |
| | Viscosity $\eta_0$ [mPa·s] | | 7.5 | 7.5 | 2 | 7.5 | 7.5 | 7.5 | 7.5 | 7.5 |
| | Metal complex-forming ability | | Yes | Yes | Yes | No | No | No | No | No |
| Application method | | | Inkjet | Inkjet | Inkjet | Inkjet | Inkjet | Inkjet | Inkjet | Inkjet |
| Evaluation | | Process adhesiveness | A | B | A | A | A | A | A | A |
| | | Cycle characteristics | A | A | A | C | B | C | D | B |
| | | Rate characteristics | A | A | A | B | B | B | C | B |
| | | Detectability | A | A | B | A | A | A | A | C |

23

In Table 1:

"BA" indicates butyl acrylate;
"MAA" indicates methacrylic acid;
"ST" indicates styrene;
"AMA" indicates allyl methacrylate;
"EDMA" indicates ethylene glycol dimethacrylate; and
"CMC" indicates carboxymethyl cellulose.

It can be seen from Table 1 that Examples 1 to 6 demonstrate that an adhesive layer formed using a slurry for an adhesive layer that contains an organic coloring material has high detectability. Examples 1 to 6 also demonstrate that an adhesive layer formed using a slurry for an adhesive layer that contains an organic coloring material has high process adhesiveness, and that a secondary battery including such an adhesive layer has excellent rate characteristics and cycle characteristics.

On the other hand, Comparative Example 1 demonstrates that although an adhesive layer formed using a slurry for an adhesive layer that contains an inorganic coloring material instead of an organic coloring material has high detectability, a secondary battery that includes the adhesive layer has poor cycle characteristics. Moreover, Comparative Example 2 demonstrates that although an adhesive layer formed using a slurry for an adhesive layer that does not contain an organic coloring material has high process adhesiveness and although a secondary battery that includes the adhesive layer has excellent cycle characteristics and rate characteristics, the adhesive layer has low detectability.

INDUSTRIAL APPLICABILITY

According to the present disclosure, it is possible to provide a slurry for a non-aqueous secondary battery adhesive layer and a battery member for a non-aqueous secondary battery that enable simple detection of the position of an adhesive layer while also causing a secondary battery to display good battery characteristics.

Moreover, according to the present disclosure, it is possible to provide a method of producing a laminate for a non-aqueous secondary battery and a method of producing a non-aqueous secondary battery that make it possible to inhibit the formation of defective products while also causing a secondary battery to display good battery characteristics.

**Claims**

1. A slurry for a non-aqueous secondary battery adhesive layer comprising a polymer (A), an organic coloring material, and water, wherein
the organic coloring material has a proportional content of not less than 0.1 parts by mass and not more than 50 parts by mass per 100 parts by mass of the polymer (A).

2. The slurry for a non-aqueous secondary battery adhesive layer according to claim 1, wherein the organic coloring material has a solubility of 5 mass% or less in electrolyte solution at 25°C.

3. The slurry for a non-aqueous secondary battery adhesive layer according to claim 1 or 2, wherein the organic coloring material includes an organic coloring material that can form a metal complex with a metal ion.

4. An adhesive layer-equipped battery member for a non-aqueous secondary battery comprising:

a substrate; and
an adhesive layer formed at at least one surface of the substrate, wherein
the substrate is a separator substrate or an electrode substrate, and
the adhesive layer is a dried product of the slurry for a non-aqueous secondary battery adhesive layer according to any one of claims 1 to 3.

5. A method of producing a laminate for a non-aqueous secondary battery comprising:

an application step of applying the slurry for a non-aqueous secondary battery adhesive layer according to any one of claims 1 to 3 onto a substrate;
a drying step of drying the slurry for a non-aqueous secondary battery adhesive layer that has been applied onto the substrate to form an adhesive layer;

a detection step of detecting a position of the adhesive layer that has been formed on the substrate and performing a suitability judgment for a state of the adhesive layer; and

an adhering step of adhering the substrate on which the adhesive layer has been formed and an adhesion target member via the adhesive layer in a case in which the state of the adhesive layer is judged to be suitable, wherein

the substrate is either or both of a separator substrate and an electrode substrate.

6. A method of producing a non-aqueous secondary battery using a laminate for a non-aqueous secondary battery obtained by the method of producing a laminate for a non-aqueous secondary battery according to claim 5.

**INTERNATIONAL SEARCH REPORT**

| | International application No. |
|---|---|
| | PCT/JP2019/036852 |

A. CLASSIFICATION OF SUBJECT MATTER
Int.Cl. H01M2/16(2006.01)i, H01M4/13(2010.01)i, H01M4/139(2010.01)i,
H01M10/058(2010.01)i

According to International Patent Classification (IPC) or to both national classification and IPC

B. FIELDS SEARCHED

Minimum documentation searched (classification system followed by classification symbols)
Int.Cl. H01M2/16, H01M4/13, H01M4/139, H01M10/058

Documentation searched other than minimum documentation to the extent that such documents are included in the fields searched
Published examined utility model applications of Japan       1922–1996
Published unexamined utility model applications of Japan     1971–2019
Registered utility model specifications of Japan             1996–2019
Published registered utility model applications of Japan     1994–2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2015-156395 A (SUMITOMO CHEMICAL CO., LTD.) 27 August 2015, claims, examples 1, 6 & US 2015/0171393 A1, claims, examples 1, 6 & WO 2014/014118 A1 & CN 104508898 A & KR 10-2015-0032895 A | 1-6 |
| Y | JP 2006-338907 A (TOSHIBA BATTERY CO., LTD.) 14 December 2006, paragraphs [0007], [0009], [0024], examples (Family: none) | 1-6 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 18.10.2019 | Date of mailing of the international search report 05.11.2019 |
|---|---|
| Name and mailing address of the ISA/ Japan Patent Office 3-4-3, Kasumigaseki, Chiyoda-ku, Tokyo 100-8915, Japan | Authorized officer

Telephone No. |

Form PCT/ISA/210 (second sheet) (January 2015)

**INTERNATIONAL SEARCH REPORT**

| International application No. |
| --- |
| PCT/JP2019/036852 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 10-321200 A (ZEON CORPORATION) 04 December 1998, paragraph [0025] (Family: none) | 2 |
| Y | JP 2011-210412 A (ZEON CORPORATION) 20 October 2011, paragraph [0041] (Family: none) | 2 |
| Y | JP 2016-042459 A (SHOWA DENKO PACKAGING CO., LTD.; SHOWA DENKO KK) 31 March 2016, paragraph [0078] & US 2016/0049625 A1, paragraph [0118] & DE 102015215692 A & CN 105374959 A & KR 10-2016-0021716 A | 3 |
| Y | JP 2018-085270 A (SHOWA DENKO PACKAGING CO., LTD.) 31 May 2018, paragraph [0083] & WO 2018/096743 A1 & CN 207800773 U | 3 |
| A | JP 02-066852 A (NIPPON MUKI CO., LTD.) 06 March 1990, page 2, lower left column (Family: none) | 1-6 |
| A | JP 2017-016754 A (SANYO ELECTRIC CO., LTD.) 19 January 2017, paragraph [0011] & US 2016/0380300 A1, paragraph [0013] | 1-6 |

Form PCT/ISA/210 (continuation of second sheet) (January 2015)

**REFERENCES CITED IN THE DESCRIPTION**

**Patent documents cited in the description**

- WO 2015198530 A1
- WO 2012115096 A1

- JP 2012204303 A
- JP 2013145763 A